# EUROPÄISCHE PATENTSCHRIFT

(11) **EP 1 276 650 B1**
(45) Veröffentlichungstag und Bekanntmachung des Hinweises auf die Patenterteilung: **22.10.2003**
(21) Anmeldenummer: 01909721.1
(22) Anmeldetag: 05.02.2001
(51) Int. Cl.: B60T 8/36

(54) **DRUCKSTEUERGERÄT**
PRESSURE CONTROL DEVICE
APPAREIL DE REGULATION DE PRESSION

(30) Priorität: 18.02.2000 DE 10007350; 18.02.2000 DE 10007351; 18.02.2000 DE 10007353; 20.06.2000 DE 10030250
(43) Veröffentlichungstag der Anmeldung: 22.01.2003
(73) Patentinhaber: Continental Teves AG & Co. oHG, 60488 Frankfurt (DE)
(72) Erfinder: BECK, Erhard, 35781 Weilburg (DE); VOLZ, Peter, 64291 Darmstadt (DE)
(86) Internationale Anmeldenummer: EP0101182
(87) Internationale Veröffentlichungsnummer: WO01060669

(56) Entgegenhaltungen:
- WO-A-00/02755
- DE-A- 19 711 366
- DE-A- 19 755 821
- US-A- 5 866 822
- US-A- 5 925 826

## Beschreibung

Die Erfindung betrifft ein Drucksteuergerät, insbesondere für Kraftfahrzeugbremsanlagen nach dem Oberbegriff des Patentanspruchs 1.

Ein Drucksteuergerät ist bereits aus der DE 19514383 A1 bekannt. Dieses Drucksteuergerät weist parallel zu mehreren Ventilreihen in einem Ventilblock ein paar Drucksensoren auf, die unmittelbar im Ventilblock befestigt sind und die über einen auf dem Ventilblock aufgesetzten Deckel elektrisch kontaktiert werden. Dies erfordert zwangsläufig einen Ventilblock, der hinsichtlich seiner Abmessungen und seines Verbohrungsschemas an die Bedürfnisse der Drucksensoren angepasst ist.

Aus der gattungsbildenden DE-A-197 55 821 sind eine Steuerschaltung und ein Drucksensor in einem gemeinsamen Gehäuse eines Anbausteuergeräts untergebracht, an dessen Unterseite ein Druckmeßelement mit Steckrohr angeordnet ist. Zur Bildung eines Drucksteuergeräts erstreckt sich das Steckrohr beim Aufsetzen des Anbausteuergeräts in einen Fluidkanal eines Hydraulikblocks. Fertigungstechnisch besonders nachteilig ist, daß der Hydraulikblock im Bereich des Fluidkanals mit einer Stichbohrung, einem Einsteckkegel, einer Stützscheibe und einem Fangtrichter zu versehen ist, um den Fluidkanal mit dem Steckrohr hydraulisch zu verbinden. Ein weiterer Nachteil ergibt sich durch den erforderlichen Platzbedarf für die Einmündungsstelle des Steckrohrs in den Hydraulikblock, um die Verbindung zum Fluidkanal herstellen zu können.

In der DE-A-197 11 366 wird eine Meßvorrichtung vorgestellt, bestehend aus mehreren Sensoren und einer mit den Sensoren elektrisch gekoppelten, auf einem Schaltungsträger angeordneten Auswerteschaltung. Diese Meßvorrichtung weist eine Konsole auf, die zur kompakten Aufnahme des Schaltungsträgers und der Sensoren dient.

Daher ist es die Aufgabe der vorliegenden Erfindung, ein Drucksteuergerät derart zu gestalten, daß durch die Anordnung von Drucksensoren die Auslegung und Fertigung des Hydraulikblocks nicht beeinflusst wird.

Diese Aufgabe wird erfindungsgemäß für ein Drucksteuergerät der eingangs genannten Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung mehrerer Ausführungsbeispiele anhand entsprechender Zeichnungen hervor.

Es zeigen:
- Fig. 1: eine Explosionszeichnung für ein Drucksteuergerät,
- Fig. 2: einen vergrößerten Ausschnitt einer konstruktiven Ausgestaltung des in Fig. 1 dargestellten Drucksteuergerätes im Bereich eines Elektromagnetventils,
- Fig. 3: eine von Fig. 2 konstruktiv abweichende elektrische Kontaktierung und Anordnung eines Drucksensors an einem Elektromagnetventil,
- Fig. 4: eine Draufsicht auf einen blockförmigen Ventilträger, mit einem Sensorträger, mehreren auf den Drucksteuerventilen angeordneten Drucksensoren und einer Platine, die in einem den Ventilträger verschließenden Deckel gehalten ist,
- Fig. 5: eine Perspektivdarstellung des im Sensorträger gehaltenen Drucksensors.

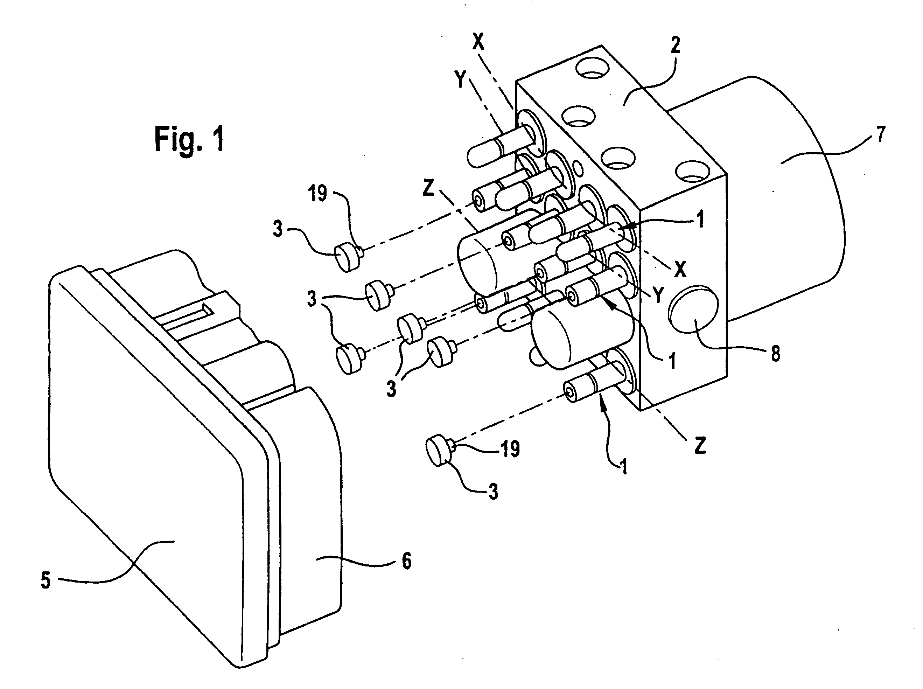

Die Fig. 1 zeigt in nicht maßstäblicher Abbildung ein Drucksteuergerät, bestehend aus einem mehrere Drucksteuerventile 1 aufnehmenden Ventilträger 2, mit mehreren den Drucksteuerventilen 1 zugeordneten Drucksensoren 3 zur Erfassung des hydraulischen Drucks in den Druckmittelkanälen 4, die sich bis in die am Ventilträger 2 hervorstehenden Endabschnitte der Drucksteuerventile 1 erstrecken, sowie mit einer elektrischen und/oder elektronischen Bauelemente aufweisenden Elektrobaugruppe 5, die über mehrere elektrische Kontakte 18 mit den Drucksteuerventilen 1 und den Drucksensoren 3 verbunden ist. Die Drucksensoren 3 sind in vorliegendem Ausführungsbeispiel an den in Grundstellung normalerweise geschlossenen Drucksteuerventilen 1 angebracht. Bei Wunsch oder Bedarf ist jedoch gleichfalls eine derartige Anordnung von Drucksensoren 3 an den in Grundstellung geöffneten Drucksteuerventilen 1 möglich. Die in den drei parallelen Ventilreihen X, Y, Z am blockförmigen Ventilträger 2 überstehenden Bauteile der Drucksteuerventile 1 bilden gewissermaßen mit den im rahmenförmigen Deckeln 6 der Elektrobaugruppe 5 angeordneten Ventilspulen nach dem Aufsetzen des Deckels 6 auf den Ventilträger 2 einen Magnetantrieb zur elektromagnetischen Betätigung der Ventilhydraulik im Ventilträger 2. Die Drucksensoren 3 sind in einem die Elektrobaugruppe 5 von den Drucksteuerventilen 1 trennenden Zwischenraum 17 als scheibenförmige Drucksensormodule angeordnet. Ferner geht aus Fig. 1 hervor, dass auf der vom Deckel 6 abgewandten Stirnseite des Ventilträgers 2 ein Elektromotor 7 zum Antrieb einer Hydraulikpumpe 8 angeordnet ist, die gleichfalls im Ventilträger 2 integriert ist. Der Elektromotor 7 ist über einen im Ventilträger 2 hindurchgeführten Elektrostecker mit der im Deckel 6 angeordneten Elektrobaugruppe 5 verbunden, so dass die elektrische Kontaktierung nicht auf die Drucksensoren 3 und die Drucksteuerventile 1 beschränkt 1 ist.

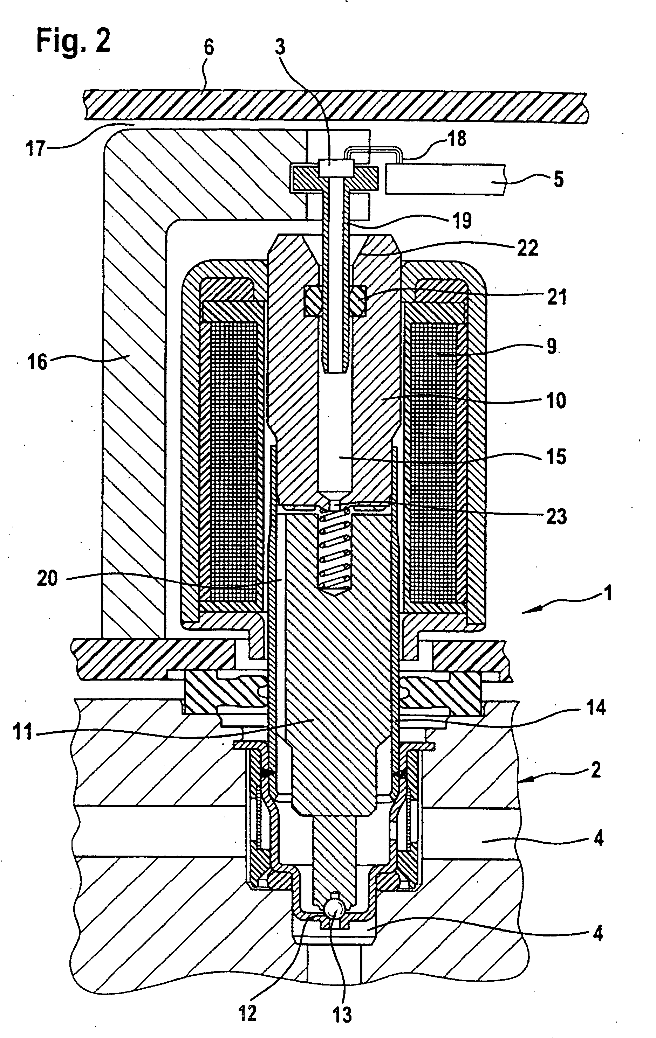

Weitere Einzelheiten des Drucksteuergerätes sollen im folgenden anhand der Fig. 2 erläutert werden.

Die Fig. 2 zeigt einen vergrößerten Ausschnitt des in Fig. 1 dargestellten Drucksteuergerätes im Bereich eines Elektromagnetventils 1. Bei diesem Drucksteuerventil 1 handelt es sich um ein in Grundstellung geschlossenes Elektromagnetventil, dessen Magnetantrieb im wesentlichen durch die auf das hülsenförmige Ventilgehäuse 14 aufgesetzte Ventilspule 9, den das Ventilgehäuse 9 verschließenden Magnetkern 10 und den im Ventilgehäuse 14 beweglich angeordneten Magnetanker 11 besteht, der in Richtung auf den Ventilsitz 12 im Ventilgehäuse 14 ein kugelförmiges Ventilschließglied 13 trägt. Das Drucksteuerventil 1 erstreckt sich in diedruckmittelführende Kanäle 4 innerhalb des Ventilträgers 2, die je nach Anwendungsfall zu einem Bremsdruckgeber und/oder den Radbremsen einer Kraftfahrzeugbremsanlage führen.

Als eine Besonderheit der Erfindung ist hierbei die Anordnung eines den Magnetkern 10 durchdringenden Druckmittelkanals 15 anzusehen, der sich bis zu den zwischen dem Drucksteuerventil 1 und der Elektrobaugruppe 5 angeordneten Drucksensor 3 erstreckt. Der Drucksensor 3 ist mittels eines speziellen Sensorträgers 16 in dem Zwischenraum 17 des Drucksteuergerätes positioniert. Aus dem Sensorträger 16 führen mit dem Drucksensor 3 verbundene elektrische Kontakte 18 zur Elektrobaugruppe 5 (Steuer- und Regelelektronik), die in Figur 2 lediglich symbolisch dargestellt ist.

Eine weitere Besonderheit des Drucksteuergerätes ist in der gewählten Sensierung des im Druckmittelkanal 15 anstehenden Drucks zu erkennen, wozu sich nämlich in den Magnetkern 10 ein Druckmessrohr 19 erstreckt, das über die im Magnetanker 11 eingelassene Längsnut 20 mit dem Hydraulikdruck am Ventilschließglied 13 hydraulisch verbunden ist.

Um Fertigungstoleranzen möglichst unbeschadet bei der Sensormontage überbrücken zu können, ist entweder das Druckmessrohr 19, der Drucksensor 3 oder der Sensorträger 16 toleranzausgleichend angeordnet. Dies kann beispielhaft durch ein nachgiebig gelagertes und/oder nachgiebig verformbares Druckmessrohr 19 erfolgen, wozu gemäß der Fig. 2 in den Magnetkern 10 ein verformbares Dichtelement 21 eingesetzt ist. Zur Montageerleichterung des Druckmessrohres 19 weist der Magnetkern 10 in Richtung des Druckmittelkanals 15 eine Trichteröffnung 22 auf. Das sich in den Sensorträger 16 erstreckende Ende des Druckmessrohres 19 kann bei Bedarf elastisch mit dem Drucksensor 3 im Sensorträger 16 aufgenommen werden, während der Sensorträger 16 zur Aufnahme der auf den Drucksensor 3 einwirkenden hydraulischen Druckkraft eine möglichst steife Gehäusestützstruktur aufweist, die im vorliegenden Ausführungsbeispiel zur Aufnahme der Reaktionskraft am Ventilträger 2 befestigt ist. Zur Dämpfung möglicher Druckpulsationen in Richtung des Drucksensors 3 befindet sich im Magnetkern 10 eine Drossel 23, die bei Bedarf auch an eine andere Stelle der Drucksensierstrecke innerhalb des Drucksteuerventils 1 verlagert werden kann.

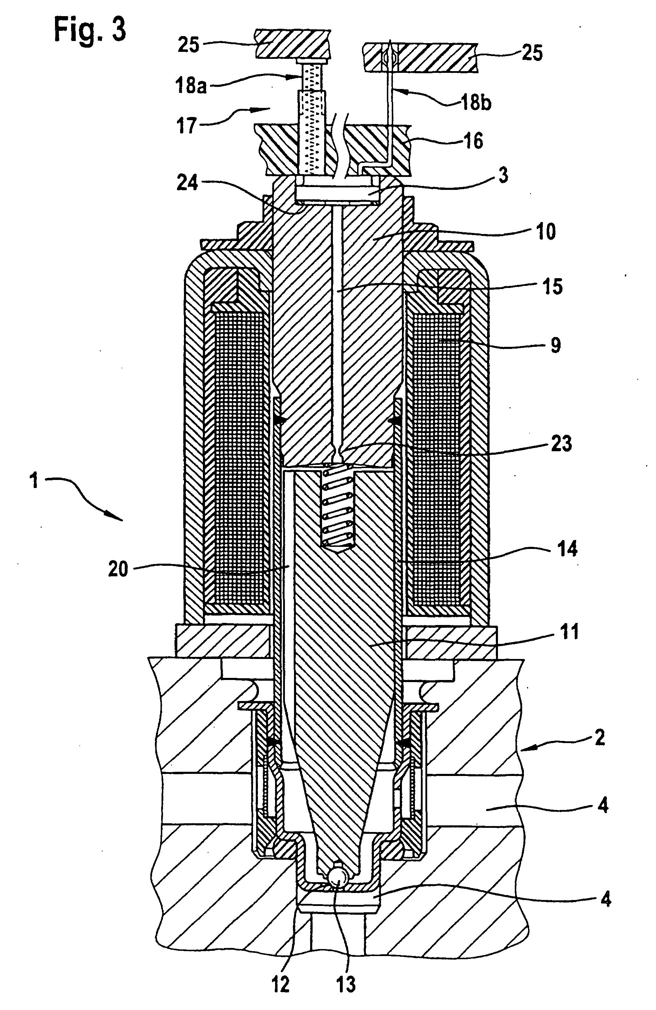

Die Fig. 3 zeigt abweichend von der Ausführungsform nach Fig. 2 eine unmittelbar in eine Ausnehmung 24 des Magnetkerns 10 eingesetzten Drucksensor 3, der kraft-, form- oder stoffschlüssig, beispielsweise mittels Laserschweißung am Außenbereich des Magnetkerns 10 befestigt ist. Je nach gewählter Befestigungsart kann der Drucksensor 3 auch unter Verwendung von Elastomer-Dichtungen im Magnetkern 10 gelagert werden. Die zur Platine 25 der Elektrobaugruppe 5 führenden elektrischen Kontakte 18 des Drucksensors 3 sind vorzugsweise als Federkontakte 18a oder Einpresskontakte 18b ausgeführt. Dies soll allerdings nicht die Verwendung von Löt- und Schweißkontaktierung ausschließen. Die elektrischen Kontakte 18 können ferner durch die Verwendung eines aus Dichtungsgel, plastischer oder elastischer Vergussmasse bestehenden Sensorträgers 16 gegen Beschädigung geschützt werden. Handelsübliche Kunststoffe eignen sich gleichfalls als Konstruktionsmaterial für den Sensorträger 16.

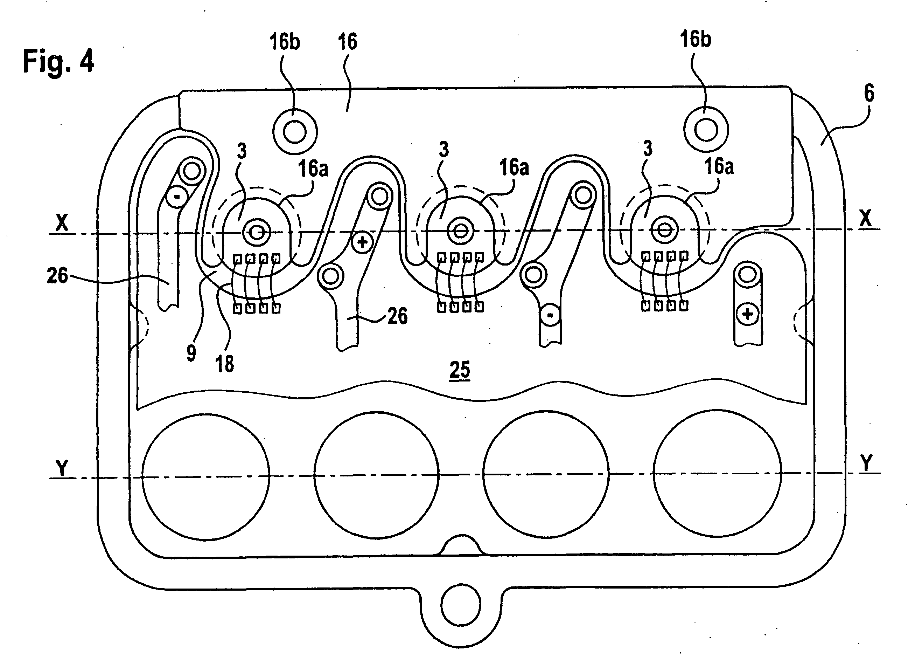

Einen Überblick über den weiteren Aufbau des schenkelförmigen Sensorträgers 16 als auch bezüglich der weiteren relevanten Bauteile soll nachfolgend anhand der Fig. 4 gegeben werden.

Die Fig. 4 zeigt eine Draufsicht auf einen blockförmigen Ventilträger 2, der im wesentlichen dem in Fig. 1 angegebenen Gesamtaufbau für ein Drucksteuergerät entspricht. Abgebildet sind in Fig. 4 zwei Ventilreihen X, Y, wobei sich der Ventilreihe X zugeordnet ein gabelförmig geöffneter Sensorträger 16 erstreckt, in dessen genuteten zangenförmigen Aussparungen 16a scheibenförmige Drucksensoren 3 eingesetzt sind, die über flexible elektrische Kontakte 18 mit einer im wesentlichen rechteckigen Platine 25 verbunden sind. Die Platine 25 ist in ihrer Kontur an die gabelförmige Sensoraufnahme des Sensorträgers 16 angepasst und erstreckt sich somit mit ihren zu den Ventilspulen 9 der Drucksteuerventile 1 gerichteten Leiterbahnen 26 beiderseits der als Aussparung 16a dargestellten Aufnahmezangen für die Drucksensoren 3 in die gabelförmigen Ausschnitte des Sensorträgers 16. Der Sensorträger 16 ist mittels zweier symbolisch dargestellter Haltepunkte 16b entweder mit der Stirnfläche des Ventilträgers 2 (siehe hierzu die Ausführung des Sonserträgers 16 in Fig. 2) oder bei Bedarf mit dem die Elektrobaugruppe 5 aufnehmenden Deckel 6 verbunden, dessen Rahmen in Fig. 4 zu erkennen ist. Die Anordnung der Drucksensoren 3 im Deckel 6 vereinfacht in der Fertigung die Funktionsprüfung aller im Deckel 6 angeordneten elektrischen und elektronischen Baugruppen auf einem einzigen Prüfvorgang, so dass der Ventilträger 2 mit seinen hydraulischen Funktionsgruppen während der elektrotechnischen Prüfung der Elektrobaugruppe 5 und der Drucksensorik nicht benötigt wird. Somit ist eine voneinander unabhängige Qualitätskontrolle der hydraulischen und elektronischen Baugruppen möglich. Die Drucksensoren 3 sind demnach Bestandteil der Elektrobaugruppe 5 und werden nach der Funktionsprüfung über die kurzen kanülenartigen Druckmessrohre 19 beim Aufsetzen des Deckels 6 auf den Ventilträger 2 konzentrisch zu den Ventilachsen in die Ventilgehäuse 8 der Drucksteuerventile 1 eingeführt.

Die vorgeschlagene Erfindung eröffnet zugleich die Möglichkeit zur Anordnung einer zwischen dem Hydraulikteil (Ventilträger 2) und dem Elektronikteil (Elektrobaugruppe 5) befindlichen Sensorbaugruppe, die durch den als Sammelschiene ausgebildeten Sensorträger 16 als eine eigenständig handhabbare und vorprüfbare Unterbaugruppe für das Drucksteuergerät automatengerecht geprüft und montiert werden kann.

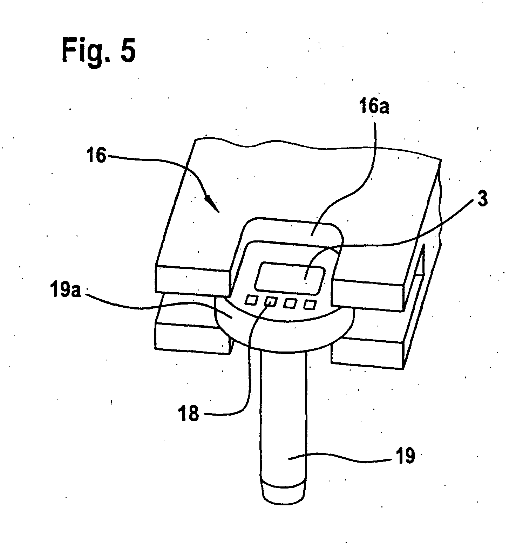

Die Perspektivdarstellung des bereits zuvor erläuterten Sensorträgers 16 verdeutlicht die geschickte zangen- bzw. klemmenartige Aufnahme des innerhalb eines scheibenförmigen Aufnahmekopfs 19a des Druckmeßrohrs 19 angeordneten Drucksensors 3, der gewissermaßen im Aufnahmekopf 19a eingebettet ist. Dies ist auch bereits in einer Seitenansicht der Bauteile in Figur 2 zu erkennen. Der Drucksensor 3 ist somit als im Aufnahmekopf vormontierte Baugruppe in die zangenartigen Schenkeln des Sensorträgers 16 eingeschoben. Dieser läßt sich entsprechend der Figur 4 zu einer Halteleiste für mehrere Drucksensoren 3 erweitern. Unabhängig von der gewählten Aufnahme und Ausführung des Drucksensors 3 ist mit diesem Sensorträger 16 eine einfache,universell zu verwendende Halterung für die Drucksensorik geschaffen. Gleiches gilt für die universellen Ausführungsmöglichkeiten der elektrischen Kontakte 18, die in Figur 5 durch den Aufnahmekopf 19a geführt sind.

In jedem Fall lassen sich durch die vorgestellten Einzelheiten der Erfindung erhebliche Vorteile gegenüber dem bekannten Stand der Technik erzielen. Dies sind u.a.:
- Optimale Platzierung der Drucksensoren auf kleinstem Bau raum
- Verkleinerung des Drucksteuergerätes
- Einsparung von Bohroperationen im Ventilträger
- Einsparung von Material
- Einsparung von Prüf- und Montagematerial
- Einsparung von Prüf- und Montagezeiten
- Klare Untergliederung nach Elektronik- und Hydraulikbau gruppen
- Keine störanfälligen Kontaktierungen
- Reduzierung von Lufteinschlüssen im Ventilträger
- Beliebig erweiterbare Drucksensoranschlüsse, ohne den Ventilträger ändern zu müssen.

### Bezugszeichenliste

- 1: Drucksteuerventile
- 2: Ventilträger
- 3: Drucksensor
- 4: Druckkanal
- 5: Elektrobaugruppe
- 6: Deckel
- 7: Elektromotor
- 8: Pumpe
- 9: Ventilspule
- 10: Magnetkern
- 11: Magnetanker
- 12: Ventilsitz
- 13: Ventilschließglied
- 14: Ventilgehäuse
- 15: Druckmittelkanal
- 16: Sensorträger
16a Aussparung
- 17: Zwischenraum
- 18: Kontakt
- 19: Druckmessrohr
19a Aufnahmekopf
- 20: Längsnut
- 21: Dichtelement
- 22: Trichteröffnung
- 23: Drossel
- 24: Ausnehmung
- 25: Platine
- 26: Leiterbahn

## Patentansprüche

1. Drucksteuergerät, insbesondere für Kraftfahrzeugbremsanlagen, mit wenigstens einem ein Drucksteuerventil (1) aufnehmenden Ventilträger (2), mit einem Drucksensor (3) zur Erfassung des hydraulischen Drucks in einem Druckkanal (4) des Ventilträgers (2) sowie mit einer elektrischen und/oder elektronischen Bauelemente aufweisenden Elektrobaugruppe (5), die über elektrische Kontakte (18) mit dem Drucksteuerventil (1) und dem Drucksensor (3) verbunden ist, wobei wenigstens einer der mit dem Drucksensor (3) verbundenen Kontakte (18) aus einem Sensorträger (16) zur Elektrobaugruppe (5) führt, **gekennzeichnet durch** nachfolgende Merkmale:
- der Drucksensor (3) ist zumindest abschnittsweise in einem zwischen dem Drucksteuerventil (1) und der Elektrobaugruppe (5) gelegenen Zwischenraum (17) positioniert,
- der Drucksensor (3) ist mit einem das Drucksteuerventil (1) durchdringenden Druckmittelkanal (15) verbunden, der **durch** einen Magnetkern (10) zu dem in das Drucksteuerventil (1) einmündenden Druckkanal (4) des Ventilträgers (2) führt,
- der Sensorträger (16) befindet sich zumindest abschnittsweise innerhalb des Zwischenraums (17).

2. Drucksteuergerät nach Anspruch 1, **dadurch gekennzeichnet, dass** die Elektrobaugruppe (5) eine Platine (25) aufweist, die von einem flüssigkeitsdichten Deckel (6) und/oder einer Vergussmasse umschlossen ist, so dass die Platine (25) mit dem Deckel (6) und/oder die Vergussmasse eine vorprüfbare modulare Baugruppe bildet, die mittels Steck-, Press- oder Lötkontaktierung mit dem Drucksensor (3) im Sensorträger (16) elektrisch verbunden ist.

3. Drucksteuergerät nach Anspruch 1, **dadurch gekennzeichnet, dass** der Drucksensor (3) entweder unmittelbar an dem Druckmittelkanal (15) des Drucksteuerventils (1) oder mittelbar über ein aus dem Drucksteuerventil (1) hervorstehendes Druckmessrohr (19) mit dem Druckmittelkanal (15) im Drucksteuerventil (1) verbunden ist, der durch den Magnetkern (10) zu dem in das Drucksteuerventil (1) einmündenden Druckkanal (4) führt.

4. Drucksteuergerät nach einem der vorhergehenden Ansprüche, **dadurch gekennzeichnet, dass** der Drucksensor (3) toleranzausgleichend, wenigstens quer beweglich zur Längsachse des Drucksteuerventils (1) angeordnet ist.

5. Drucksteuergerät nach Anspruch 4, **dadurch gekennzeichnet, dass** der Toleranzausgleich entweder über einen nachgiebig gestalteten Sensorträger (16) oder über ein nachgiebig gelagertes und/oder verformbares Druckmessrohr (19) erfolgt.

6. Drucksteuergerät nach einem der vorhergehenden Ansprüche, **dadurch gekennzeichnet, dass** der Sensorträger (16) aus einem plastischen oder elastischer Vergussmasse hergestellt ist.

7. Drucksteuergerät nach Anspruch 3, **dadurch gekennzeichnet, dass** der Sensorträger (16) zur Aufnahme von hydraulischen Reaktionskräften auf das Druckmessrohr (19) und auf den Drucksensor (3) eine steife Gehäusestützstruktur aufweist, die zur Aufnahme der Reaktionskräfte mit dem Ventilträger (2) oder mit einem den Ventilträger verschließenden Deckel (6) verbunden ist.

8. Drucksteuergerät nach Anspruch 1, **dadurch gekennzeichnet, dass** zur Dämpfung von Druckpulsationen in Richtung des Drucksensors (3) im Bereich des den Magnetkern (10) durchquerenden Druckmittelkanals (15) eine Drossel (23) vorhanden ist.

9. Drucksteuergerät nach Anspruch 1, **dadurch gekennzeichnet, dass** der Drucksensor (3) mittels Kraft-, Form- oder Stoffschluss an einem Magnetantrieb befestigt ist.

10. Drucksteuergerät nach Anspruch 9, **dadurch gekennzeichnet, dass** der Drucksensor (3) als Steckmodul ausgeführt ist, das an einem Ende ein Druckmessrohr (19) aufweist, das in den Magnetantrieb des Drucksteuerventils (1) eingefügt ist.

11. Drucksteuergerät nach Anspruch 10, **dadurch gekennzeichnet, dass** auf der vom Druckmessrohr (19) abgewandten Stirnseite der Drucksensor (3) von einem Sensorträger (16) aufgenommen ist, der entweder an einem Deckel (6) oder an einem auf den Deckel (6) aufsetzbaren Ventil träger (2) befestigt ist.

## Claims

1. Pressure control device, in particular for motor vehicle braking systems, with at least one valve carrier (2) accommodating a pressure control valve (1), a pressure sensor (3) for detecting the hydraulic pressure in a pressure channel (4) of the valve carrier (2), as well as with an electric module (5) including electric and/or electronic structural members and being connected to the pressure control valve (1) and the pressure sensor (3) by way of electric contacts (18), wherein at least one of the contacts (18) connected to the pressure sensor (3) leads from a sensor carrier (16) to the electric module (5),
**characterized by** the following features:
- the pressure sensor (3) is positioned at least in sections in a space (17) disposed between the pressure control valve (1) and the electric module (5),
- the pressure sensor (3) is connected to a pressure fluid channel (15) that penetrates the pressure control valve (1) and leads through a magnetic core (10) to the pressure channel (4) of the valve carrier (2) opening into the pressure control valve (1),
- the sensor carrier (16) is located at least in sections within the space (17).

2. Pressure control device as claimed in claim 1,
**characterized in that** the electric module (5) includes a printed circuit board (25) which is enclosed by a fluid-tight cover (6) and/or a sealing compound so that the printed circuit board (25) along with the cover (6), and/or the sealing compound forms a pretestable modular assembly which is electrically connected to the pressure sensor (3) in the sensor carrier (16) by means of a plug-in, press-fit or soldered contacting engagement.

3. Pressure control device as claimed in claim 1,
**characterized in that** the pressure sensor (3) is connected either directly to the pressure fluid channel (15) of the pressure control valve (1) or indirectly to the pressure fluid channel (15) in the pressure control valve (1) by way of a pressure meter tube (19) projecting from the pressure control valve (1), the said channel (15) leading through the magnetic core (10) to the pressure channel (4) that opens into the pressure control valve (1).

4. Pressure control device as claimed in any one of the preceding claims,
**characterized in that** the pressure sensor (3) is arranged in a tolerance-compensating fashion, at least so as to be transversely movable relative to the longitudinal axis of the pressure control valve (1).

5. Pressure control device as claimed in claim 4,
**characterized in that** the tolerance compensation is effected either by way of a yieldingly designed sensor carrier (16) or by way of a yieldingly supported and/or deformable pressure meter tube (19).

6. Pressure control device as claimed in any one of the preceding claims,
**characterized in that** the sensor carrier (16) is made of a plastic or elastic sealing compound.

7. Pressure control device as claimed in claim 3,
**characterized in that** for taking up hydraulic reaction forces on the pressure meter tube (19) and the pressure sensor (3), the sensor carrier (16) has a stiff housing supporting structure that is connected to the valve carrier (2) or to a cover (6) closing the valve carrier in order to accommodate the reaction forces.

8. Pressure control device as claimed in claim 1,
**characterized in that** for damping pressure pulsations in the direction of the pressure sensor (3), a throttle (23) is provided in the area of the pressure fluid channel (15) that traverses the magnetic core (10).

9. Pressure control device as claimed in claim 1,
**characterized in that** the pressure sensor (3) is attached to a magnetic drive by means of operative engagement, form lock, or molecular bond.

10. Pressure control device as claimed in claim 9,
**characterized in that** the pressure sensor (3) is configured as a plug-in module which, at one end, includes a pressure meter tube (19) that is inserted into the magnetic drive of the pressure control valve (1).

11. Pressure control device as claimed in claim 10,
**characterized in that** on the end face remote from the pressure meter tube (19), the pressure sensor (3) is accommodated in a sensor carrier (16) which is either attached to a cover (6) or to a valve carrier (2) mountable on the cover (6).

## Revendications

1. Appareil de commande de pression, notamment pour installation de freinage de véhicule automobile, comprenant au moins un porte-valve (2) servant à loger une valve de commande de pression (1), un capteur de pression (3) servant à détecter la pression hydraulique dans un conduit de pression (4) du porte-valves (2), et un groupe structurel électrique (5) qui comporte des composants électriques et/ou électroniques et qui est relié au moyen de contacts électriques (18) à la valve de commande de pression (1) et au capteur de pression (3), au moins l'un des contacts (18) reliés au capteur de pression (3) menant d'un porte-capteur (16) au groupe structurel électrique (5), **caractérisé par** les particularités suivantes :
- le capteur de pression (3) est positionné, au moins en partie, dans un espace intermédiaire (17) située entre la valve de commande de pression (1) et le groupe structurel électrique (5),
- le capteur de pression (3) est relié à un conduit d'agent de pression (15) qui traverse la valve de commande de pression (1) et qui, en traversant le noyau magnétique (10), mène au conduit de pression (4) du porte-valve (2) qui débouche dans la valve de commande de pression (1),
- le porte-capteur (16) se trouve au moins en partie dans l'espace intermédiaire (17).

2. Appareil de commande de pression suivant la revendication 1, **caractérisé en ce que** le groupe structurel électrique (5) comprend une platine (25) qui est entourée par un couvercle (6) étanche aux liquides et/ou par une masse coulée, de sorte que la platine (25) constitue, avec le couvercle (6) et/ou la masse coulée, un groupe structurel modulaire pouvant être soumis à un contrôle préalable, qui est relié au moyen d'une mise en contact par enfichage, par emboîtement à force ou par brasage au capteur de pression (3) situé dans le porte-capteur (16).

3. Appareil de commande de pression suivant la revendication 1, catactérisé en ce que le capteur de pression (3) est relié, soit directement au conduit d'agent de pression (15) de la valve de commande de pression (1), soit indirectement, par l'intermédiaire d'un tube de mesure de pression (19) faisant saillie à partir de la valve de commande de pression (1), au conduit d'agent de pression (15), situé dans la valve de commande de pression (1), qui, en traversant le noyau magnétique (10), mène au conduit de pression (4) débouchant dans la valve de commande de pression (1).

4. Appareil de commande de pression suivant l'une des revendications précédentes, **caractérisé en ce que** le capteur de pression (3) est disposé, d'une manière compensant les tolérances, de façon à être mobile au moins transversalement vis-à-vis de l'axe longitudinal de la valve de commande de pression (1).

5. Appareil de commande de pression suivant la revendication 4, **caractérisé en ce que** la compensation de tolérances a lieu soit au moyen d'un porte-capteur (16) de réalisation flexible, soit au moyen d'un tube de mesure de pression (19) déformable et/ou monté d'une manière flexible.

6. Appareil de commande de pression suivant l'une des revendications précédentes, **caractérisé en ce que** le porte-capteur (16) est formé d'une masse plastique ou élastique coulée.

7. Appareil de commande de pression suivant la revendication 3, **caractérisé en ce que**, pour absorber des forces de réaction hydraulique sur le tube de mesure de pression (19) et sur le capteur de pression (3), le porte-capteur (16) comporte une structure d'appui de boîtier rigide qui, pour absorber les forces de réaction, est reliée au porte-valve (2) ou à un couvercle (6) fermant le porte-valve.

8. Appareil de commande de pression suivant la revendication 1, **caractérisé en ce que**, pour amortir des pulsations de pression en direction du capteur de pression (3), un étranglement (23) est prévu dans la zone du conduit d'agent de pression (15) traversant le noyau magnétique (10).

9. Appareil de commande de pression suivant la revendication 1, **caractérisé en ce que** le capteur de pression (3) est fixé à un entraînement magnétique par application de force, par complémentarité de formes ou par coopération de matières.

10. Appareil de commande de pression suivant la revendication 9, **caractérisé en ce que** le capteur de pression (3) est réalisé sous forme de module à emboîtement qui comporte à une extrémité un tube de mesure de pression (19) qui est introduit dans l'entraînement magnétique de la valve de commande de pression (1).

11. Appareil de commande de pression suivant la revendication 10, **caractérisé en ce que**, sur la face frontale située à l'opposé du tube de mesure de pression (19), le capteur de pression (3) est reçu par un porte-capteur (16) qui est fixé soit à un couvercle (6), soit à un porte-valve (2) pouvant être posé sur le couvercle (6).
